# EUROPEAN PATENT SPECIFICATION

(11) **EP 2 113 492 B1**
(45) Date of publication and mention of the grant of the patent: **27.02.2019**
(21) Application number: 09158074.6
(22) Date of filing: 16.04.2009
(51) Int. Cl.: C03B 33/03, C03B 33/033, C03B 33/07

(54) **Machine for cutting glass panes with means for rotation of a glass pane**
Maschine zum Schneiden von Glasscheiben mit Mitteln zur Drehung eines Glasscheiben
Machine de découpage de plaques de verre avec des moyens de rotation d'une plaque de verre

(30) Priority: 29.04.2008 IT MI20080788
(43) Date of publication of application: 04.11.2009
(73) Proprietor: Macotec S.R.L., 23010 Rogolo, (SO) (IT)
(72) Inventor: Colli, Maurizio, 23019, Traona SO (IT)
(74) Representative: Forattini, Amelia

(56) References cited:
- EP-A- 0 807 609
- EP-A- 1 118 592
- DE-A1- 4 234 536
- ES-A1- 2 265 244
- US-A- 5 433 818
- US-A1- 2005 178 258

## Description

The present invention relates to a machine for cutting glass panes with means for the rotation of at least one pane.

As is known, in machines for cutting glass panes in general and laminated glass in particular, it is necessary to perform cuts in one direction and other cuts in a direction that is perpendicular thereto, and therefore it is necessary to rotate the pane in order to perform the subsequent cut.

Such rotation usually requires manual interventions, which are burdensome and are not always welcomed by operators, and therefore solutions that perform rotation with automatic positioning of the pane have already been devised.

In particular, EP-0807609 provides for a sucker which is arranged below the pane worktable, in a fixed and preset position of the worktable, and is provided with a vertical rising/descending motion and with a rotary motion about its own axis.

When necessary, the sucker is lifted until it reaches the lower surface of the pane and the pane is gripped by vacuum; then, by means of a simple rotary motion of the sucker, rotation is also imparted to the glass pane.

Such embodiment suffers the drawback that the sucker is arranged in a fixed position and at a certain distance from the cutting line.

The diameter of the sucker, as well as its position, which is fixed at a certain distance from the cutting axis, limit considerably the minimum dimensions of the portion of pane that can be rotated automatically. In the case instead of portions of very large panes, the fixed position of the sucker limits the rotation, since the length of the diagonal of the pane portion can exceed the gap available below the cutting bridge.

Moreover, the pane can be rotated only about the axis of the sucker and accordingly another operation for translational motion of the pane and squaring is necessary in order to allow the exact positioning of the pane to size for subsequent cutting, to the detriment therefore of the processing speed of the machine.

Another drawback further consists in that in the presence of particularly large and heavy panes, the intense torsional stress between the pane and the sucker can cause slippages that prevent correct positioning of the pane, as well as possible damage to its lower surface in the presence of any slippage between the sucker and the pane.

Another known solution, disclosed in EP 1975131 by the same Applicant, discloses the use of a clamp that can move along the cutting axis and in practice holds the pane by clamping it along the cut edge and positions it, by performing a combined rotary and translational motion, already in the correct position for performing the next cut, without the need for a further translational motion and squaring of the pane.

Such solution does not have technical limitations linked to performance, since it is possible to produce the combined rotary and translational motion of the pane and to clamp it in a position that can vary as a function of the dimensions of such pane to be rotated and of the subsequent measurement of the cut to be made, but has a certain constructive complexity and therefore a certain production cost that affects the final price of the machine.

Moreover, the device must be very sturdy, in order to ensure the movement of the pane, which is clamped only on a small portion of its surface; however, such portion of its surface also affects the upper face of the pane, which might be very delicate, especially in the case of low-emissivity panes.

Moreover even with this solution, in the presence of particularly large and heavy panes there is an intense torsional stress between the pane and the clamp, which can cause slippages that prevent correct positioning of the pane, as well as possible damage to both lower and upper surfaces in case of slippage between the clamp and the pane.

ES 2,265,244 describes a system for turn and placement of glass sheets in machines for cutting glass, composed by a series of a suction cups with independent movements but coordinated among themselves. In particular, there is a first suction cup mounted on a carriage movable along a first axis, and two other suction cups mounted on a second carriage movable along a second axis perpendicular to the first axis. One of the suction cup of the second carriage can rotate about a third axis, perpendicular to the plane formed by the first and second axes.

US 5,433,818 describes an apparatus for turning a sheet-like workpiece and for applying a sealing strip continuously along its edges, includes an air flotation/section support bed covered by an air-permeable mat, a sealing strip applicator on a carriage, suction cup assemblies movably mounted on respective mutually perpendicular slides for gripping the sheet at two adjacent corners thereof, the movement of the assemblies being coordinated such that, while gripping the sheet, one assembly is moved towards the initial position of the other assembly and simultaneously the latter is moved towards the corner diagonally opposite the corner at which the first assembly was initially arranged. US 2005/178258-A1 discloses a cutting table for laminated glass panes comprising a surface for supporting the pane being worked and pushers for positioning the pane being worked at the cutting heads; one of the pushers is being provided with angular positioning elements and determines two separate points for engagement with the pane; an abutment element defines a third point for engagement with the pane being worked.

The aim of the present invention is to solve the problem described above, by providing a machine for cutting glass panes and the like with means for the rotation of the pane that allows to provide a rotation with extremely simple means which in practice are already present on a glass cutting machine.

Within this aim, an object of the present invention is to provide a machine for rotating glass panes in cutting machines that allows to work on the pane without touching the upper surface, therefore without the possibility of damaging any upper surface coating, even in cases in which it is extremely delicate, as in the specific case of low emissivity glass.

Moreover, the peculiar structure of the machine allows to work also on small glass panes and even on large glass panes without causing stresses to the glass, much less to the engagement and grip elements that are responsible for the combined rotary and translational motion of the pane.

Another object of the invention is to allow the positioning of the pane with a preset angle with respect to the cutting axis in order to perform non-square cuts in a completely automatic manner.

If the machine for cutting the laminated material must be positioned in line with respect to a monolithic glass cutting machine, which is equipped with an appropriately provided device for the automatic movement of the pane, the cut-running device, which is typically provided on the machine of the laminated material, would be used for the automatic cut-running of the X cross-cuts, while the machine according to the present invention would be used to rotate the portions of pane through 90° in order to perform cut-running of the Y cuts.

Still another object of the present invention is to provide a machine for cutting glass panes and the like with means for the rotation of a pane which, thanks to its particular constructive characteristics, is capable of giving the greatest assurances of reliability and safety in use.

This aim, these and other objects that will become better apparent hereinafter are achieved by a machine as defined in claim 1

Further characteristics and advantages of the present invention will become better apparent from the description of a preferred but not exclusive embodiment of a machine for cutting glass panes and the like with means for the rotation of the pane, illustrated by way of nonlimiting example in the accompanying drawings, wherein:

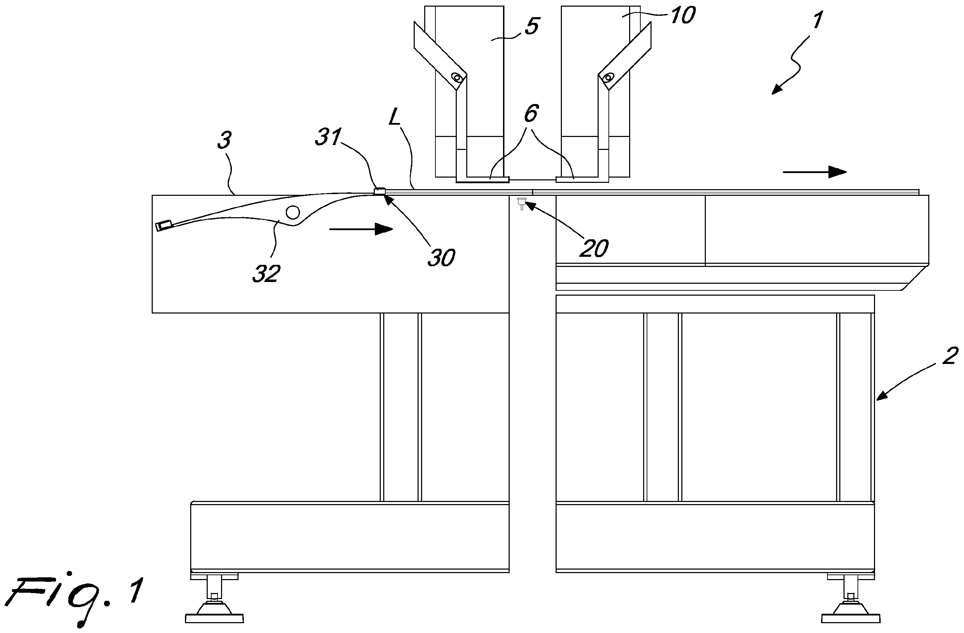

Figure 1 is a schematic elevation view of a machine for cutting laminated glass panes during the cutting of a portion of a pane;

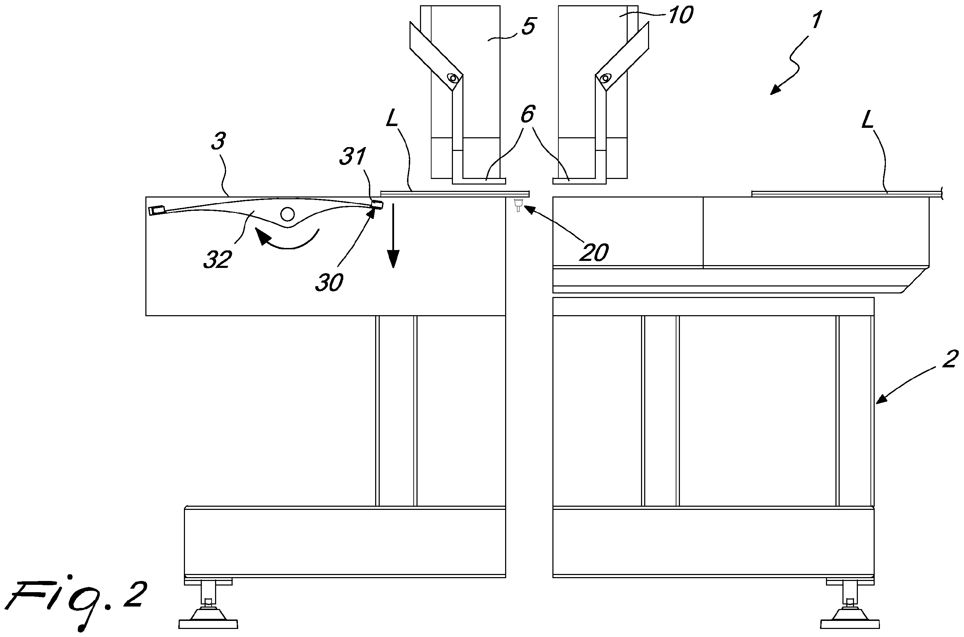

Figure 2 is a view of the step for removing the remaining portion of the pane;

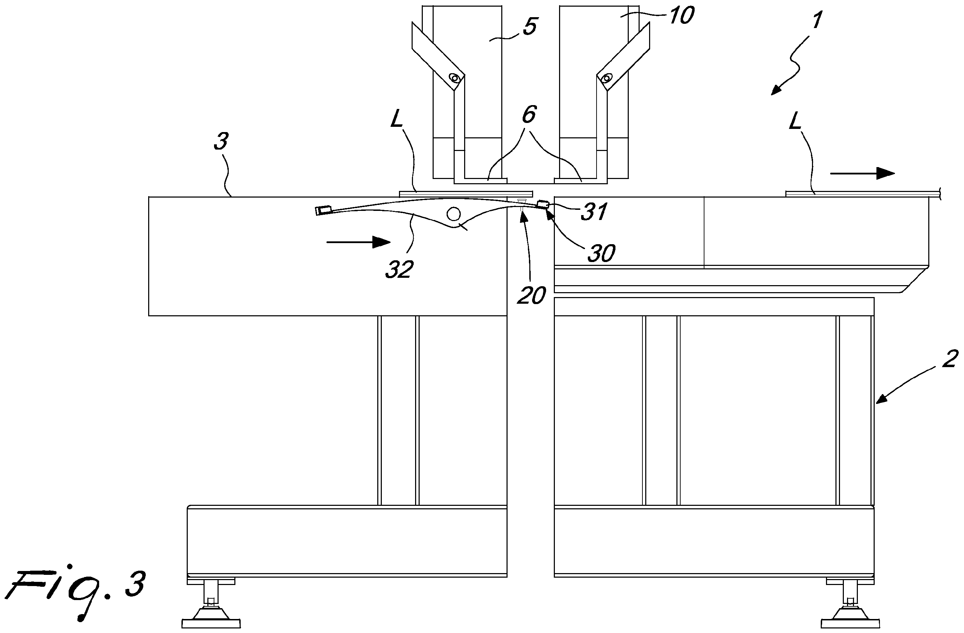

Figure 3 is a schematic elevation view of the engagement with the grip element and of the engagement element positioned but not yet in contact;

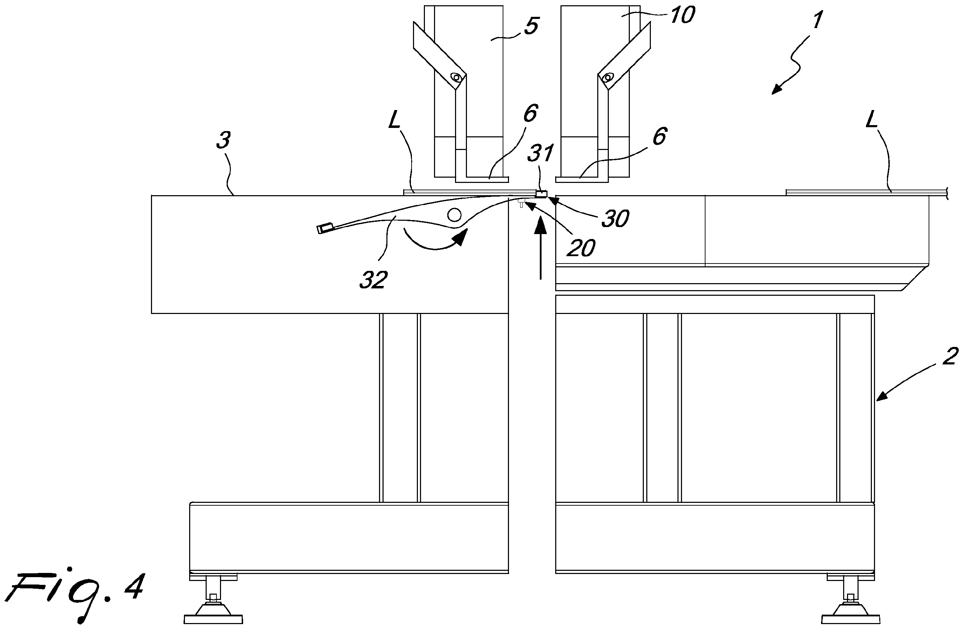

Figure 4 is an elevation view of the contact of the engagement element with the edge of the pane;

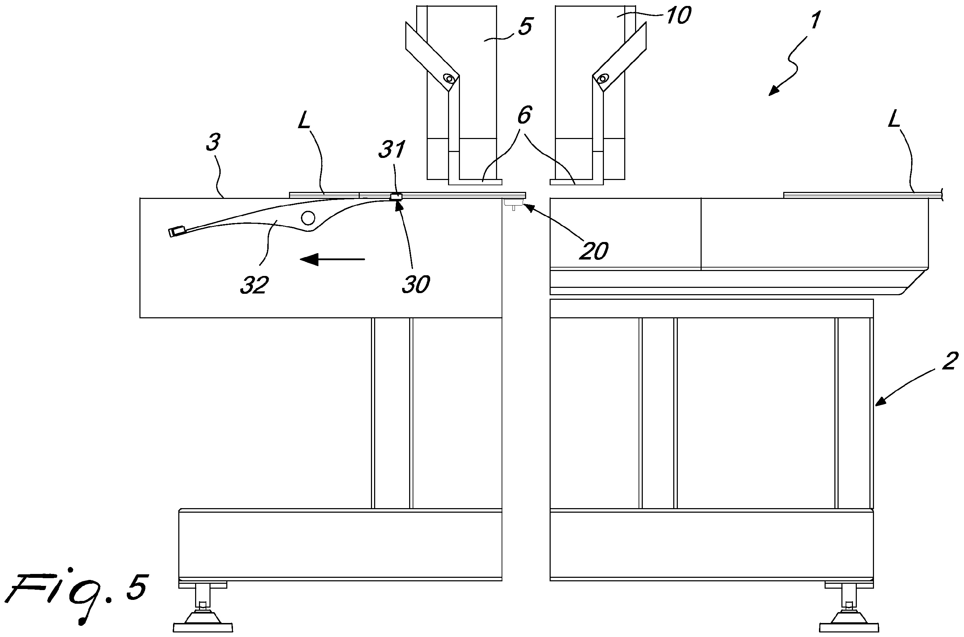

Figure 5 is an elevation view of the step of rotation of the pane;
Figure 6 is a plan view of the cut pane portion with the grip element and the engagement element positioned;
Figures 7, 8 and 9 are views in succession of the step of translational motion of the grip element and of the engagement element along two perpendicular directions, in order to provide the rotation of the pane;
Figures 10 and 11 are plan and elevation views of a circular sucker;
Figures 12 and 13 are plan and elevation views of a rectangular sucker with a central axis of rotation;
Figures 14 and 15 are plan and elevation views of a rectangular sucker with an eccentric axis of rotation;

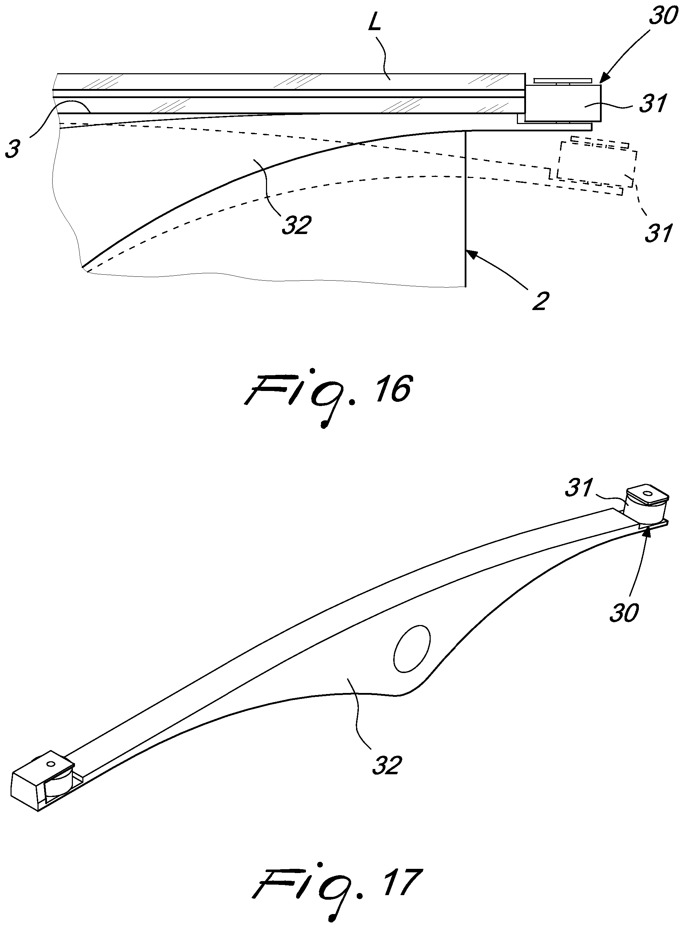

Figure 16 is an elevation view of the arrangement of the engagement element;
Figure 17 is a perspective view of the engagement element;

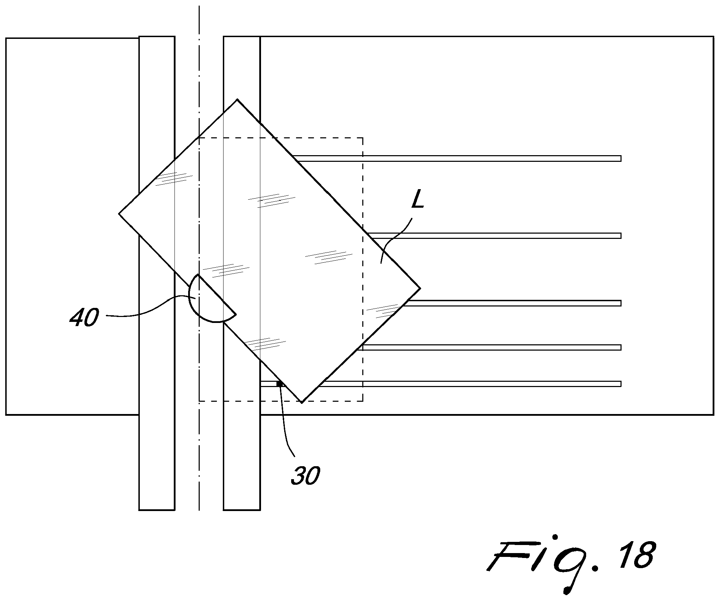

Figure 18 is a view of the machine with the grip element consisting of pliers.

With reference to the figures, the machine for cutting glass panes and the like with means for the rotation of at least one pane portion, generally designated by the reference numeral 1, is for example of the type used for laminated glass panes, which typically have two panes joined by a layer made of plastic material that is cut after dividing the panes.

The machine has a supporting frame 2, which defines a worktable 3 on which there is, in a per se known manner, a fixed crossmember 5, which is provided with means for movable retention of the pane being processed, generally designated by the reference numeral 6.

Moreover, a movable crossmember 10 is advantageously provided, which is arranged on the opposite side of the fixed crossmember 5 with respect to the scoring and cut-running line.

On the crossmember 5 there is a cutting assembly, not shown in the figures, of a per se known type, which is typically constituted by upper and lower scoring heads, with which cut-running means are associated in a per se known manner.

The peculiarity of the invention resides in that a grip element is provided, designated by the reference numeral 20, which is advantageously arranged on a lower scoring carriage and can perform a translational motion along a vertical line so as to be moved into engagement with the lower face of a pane L that has been cut.

Optionally, the grip element can be supported by an autonomous assembly that can perform a translational motion along a first direction, which preferably but not necessarily coincides with, or is otherwise parallel to, the cutting direction.

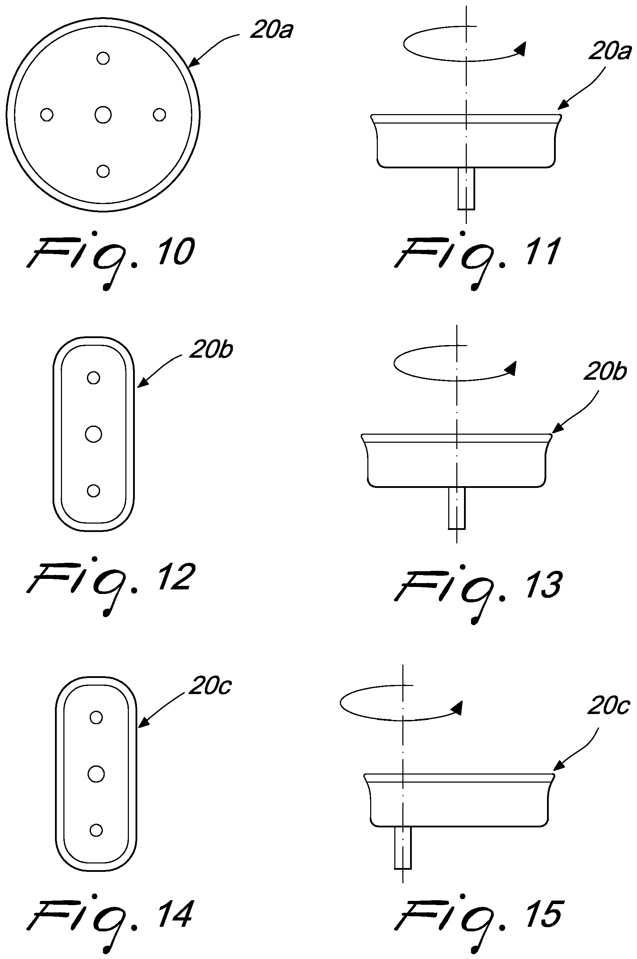

The grip element is constituted by a sucker designated by the reference numeral 20a in Figures 10, 11, which can have a circular shape, if the dimensions of the machine allow its positioning, or optionally a narrower rectangular shape designated by the reference numeral 20b, 20c in Figures 12 to 15, which for an equal useful surface has a reduced width, which can have a central or otherwise eccentric rotation axis in order to allow the sucker, which is jointly connected to the glass pane during its movement, to self-adapt to the position of the pane during combined rotary and translational motion.

The machine further has an engagement element, designated by the reference numeral 30, which is advantageously constituted by one of such elements that allow to perform abutment for the positioning of the pane, designated by the reference letter L, that must be subjected to the cutting operations.

A peculiarity of the invention resides in that at least one of the abutment elements provided on the machine is structured so that it can be lowered, independently of the other elements, since it has its own separate rising and descending movement system, below the plane of arrangement of the pane L, so as to be arranged beyond the cutting line and mate with the edge of the pane L that must be rotated in a point that remains spaced with respect to the point of engagement with the grip element, constituted by the suckers 20a, 20b or 20c.

The engagement element 30 is provided by means of a roller 31 that is fitted at the end of an oscillating lever 32, which can perform a translational motion along a direction that is perpendicular to the cutting direction.

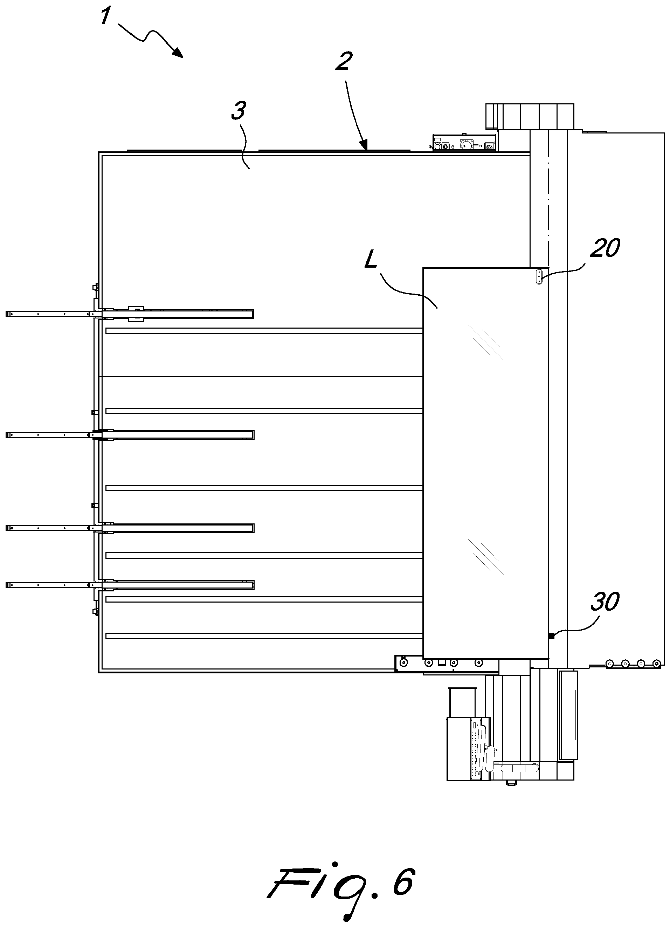

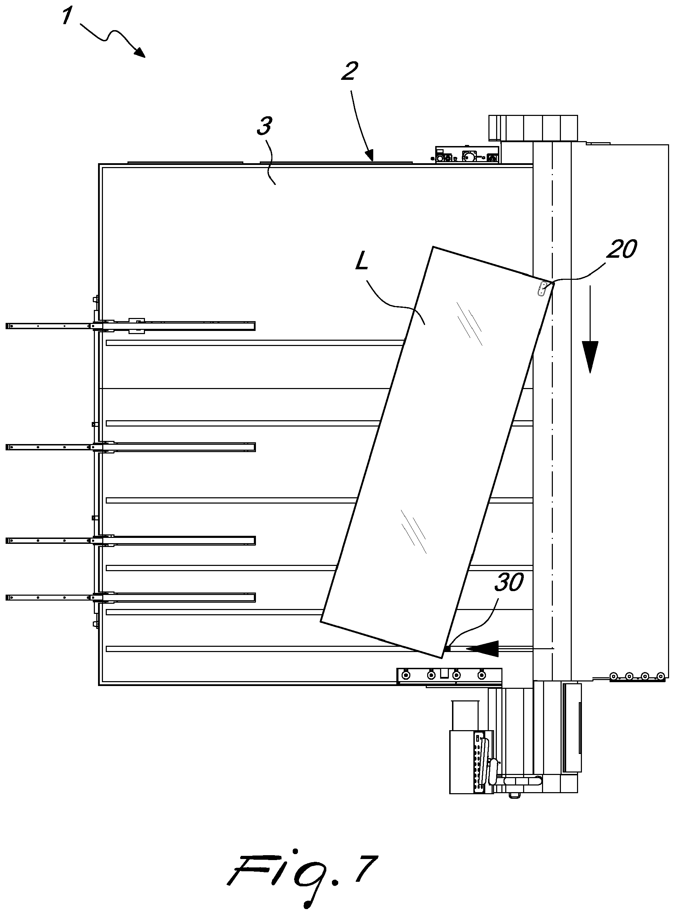

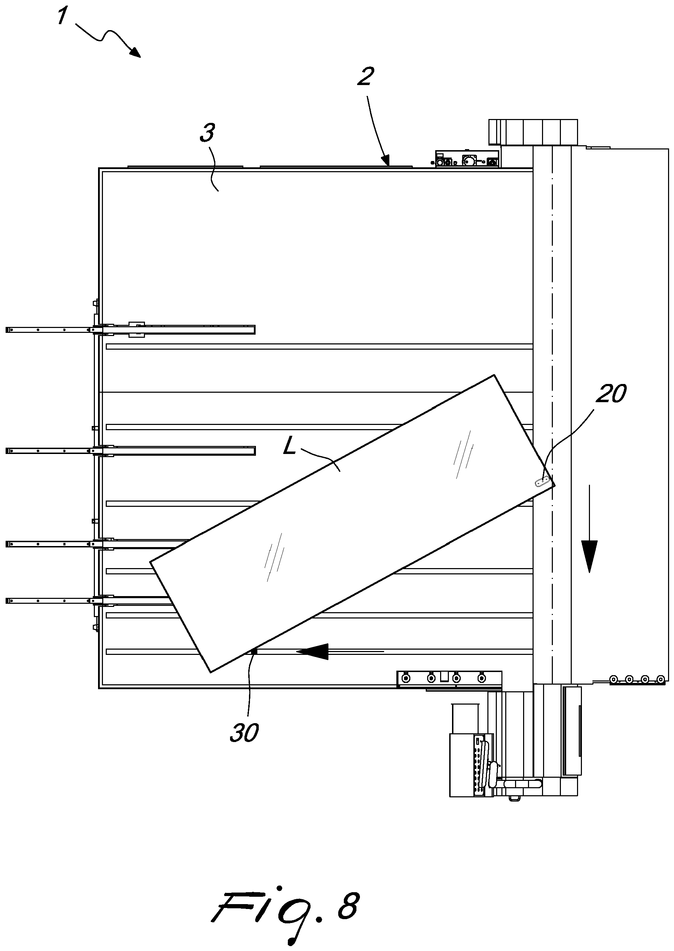

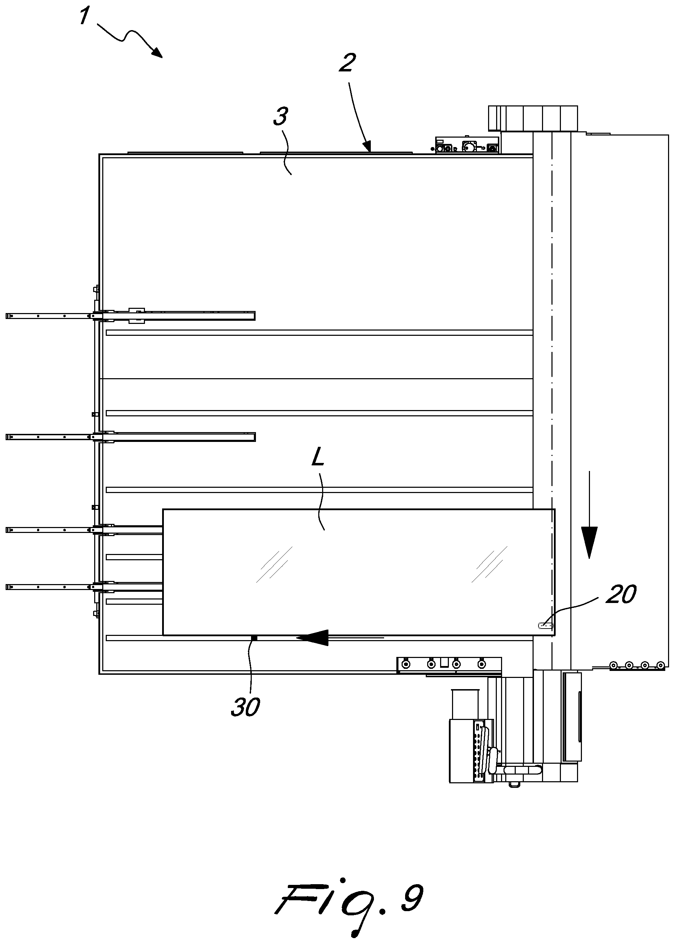

With the described arrangement, therefore, in order to turn the pane L, one performs the combined translational motion of the grip element along the cutting line and of the engagement element, which by mating with the edge of the pane gradually causes its rotation, as clearly shown in Figures 6 to 9.

During the rotation, the sucker, by way of its free axis of rotation, follows the rotation of the pane, while the engagement element, which is constituted advantageously for example by a roller 31, guides the pane, making it follow a preset path to reach the desired final position.

Once the pane is in the final position, vacuum is removed and the sucker descends and, in the case of a rectangular sucker, rotates so as to align itself again with the cutting axis.

Simultaneously or at another time, the engagement element disappears below the worktable.

With the described arrangement, the pane is never touched on its upper surface, and therefore the system is ideal for the handling of low-emissivity panes, which have a very delicate upper surface coating.

Moreover, thanks to the combined movement of the engagement element and of the grip element, the pane is arranged directly in the correct position for performing the subsequent cutting cycle, without the need to resort to additional movement and squaring operations, whether automatic or optionally semiautomatic; the positioning of the grip element in fact determines the final positioning of the pane that is rotated with respect to the cutting line.

The fact that the pane is positioned already with the appropriate measurement as soon as the combined rotary and translational motion is completed, without having to perform a new abutment, is a fact of considerable importance, since it reduces cycle times considerably, with a consequent increase in the productivity of the machine.

With the described arrangement, the stresses transmitted by the rotation device to the pane, as well as to the structure of the machine, are particularly reduced, since there are no torsions and no damaging slippages of the parts is produced.

It should be added that it is optionally possible to perform an inclined or non-square cut simply by arranging beforehand the pane on the worktable by utilizing the abutment elements that push the pane to a given position, which is calculated by the control and management system of the machine, and then the sucker is positioned in the selected point and simultaneously the engagement element performs a translational motion and consequently a rotation of the pane that can be adjusted at will.

From what has been described above, it can be seen that the invention achieves the proposed aim and objects, and in particular the fact is stressed that a machine is provided in which it is possible to perform automatically the rotation of the panes without having to introduce complex elements, but simply by utilizing in practice components that are already present on a machine; the grip element in fact can be connected directly to the lower carriage, which is usually provided so that it can slide on the cutting line and the engagement element is constituted directly by one of the abutment elements that are used on the worktable to position the panes; the only addition consists in that the engagement element can perform a translational motion below the pane so that it can arrange itself beyond the cutting line.

The invention thus conceived is susceptible of numerous modifications and variations, which are within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) for cutting glass panes with means for the rotation of at least one pane (L), comprising, on a supporting frame (2), a worktable (3) on which at least one cutting assembly works, a grip element (20) and an engagement element (30) which can be coupled on two spaced points of a pane (L) to be turned, means for the translational motion of said grip element (20) and means for the translational motion of said engagement element (30) being further provided which act along two mutually intersecting directions; said two mutually intersecting directions being substantially perpendicular to each other; said engagement element (30) being constituted by at least one abutment element provided on said worktable (3) for the positioning of the glass pane (L); said grip element (20) mating with the lower face of said pane (L) to be rotated; said grip element (20) being constituted by a sucker (20a, 20b, 20c); said grip element (20) rotating about the supporting pivot of said sucker (20a, 20b, 20c); said machine being **characterized in that** said engagement element (30) comprises a roller (31) that is supported at the end of an oscillating lever (32), which can oscillate in order to position said roller (31) in an extracted position with respect to said worktable (3) and in a position that lies below said worktable (3), said roller (31) being able to perform a translational motion below said pane (L) to be rotated.

2. The machine according to claim 1 **characterized in that** said sucker (20a, 20b, 20c) has a circular shape.

3. The machine according to claim 1, **characterized in that** said sucker (20a, 20b, 20c) has a rectangular shape.

4. The machine according to one or more of the preceding claims, **characterized in that** one of said directions corresponds to the direction of the cutting line of the machine and the other one of said directions corresponds to the movement line of the abutment elements for positioning the glass panes (L) on said worktable (3).

5. The machine according to one or more of the preceding claims, **characterized in that** said grip element (20) is supported by said assembly for moving the cutting head along said cutting line.

## Patentansprüche

1. Eine Maschine (1) zum Schneiden von Glasscheiben mit Mitteln zum Drehen mindestens einer Scheibe (L), die auf einem Tragrahmen (2) Folgendes umfasst: einen Werktisch (3), auf dem mindestens eine Schneideanordnung arbeitet, ein Greifelement (20) und ein Eingriffselement (30), die an zwei beabstandeten Punkten einer Scheibe (L), die zu drehen ist, gekoppelt sein können, wobei weiter Mittel zur Translationsbewegung des Greifelements (20) und Mittel zur Translationsbewegung des Eingriffselements (30) bereitgestellt sind, welche entlang zweier sich gegenseitig schneidender Richtungen wirken; wobei die zwei sich gegenseitig schneidenden Richtungen im Wesentlichen senkrecht zueinander verlaufen; wobei das Eingriffselement (30) von mindestens einem Widerlagerelement gebildet ist, das auf dem Werktisch (3) zur Positionierung der Glasscheibe (L) vorgesehen ist; wobei das Greifelement (20) mit der Unterseite der Scheibe (L), die zu drehen ist, zusammenpasst; wobei das Greifelement (20) von einem Sauger (20a, 20b, 20c) gebildet ist; wobei sich das Greifelement (20) um den tragenden Drehzapfen des Saugers (20a, 20b, 20c) dreht; wobei die Maschine **dadurch gekennzeichnet ist, dass** das Eingriffselement (30) eine Rolle (31) umfasst, die am Ende eines Schwinghebels (32) gelagert ist, der schwingen kann, um die Rolle (31) in einer ausgezogenen Position mit Bezug auf den Werktisch (3) und in einer Position, die unterhalb des Werktischs (3) liegt, zu positionieren, wobei die Rolle (31) imstande ist, eine Translationsbewegung unterhalb der Scheibe (L), die zu drehen ist, auszuführen.

2. Die Maschine gemäß Anspruch 1, **dadurch gekennzeichnet, dass** der Sauger (20a, 20b, 20c) eine Kreisform aufweist.

3. Die Maschine gemäß Anspruch 1, **dadurch gekennzeichnet, dass** der Sauger (20a, 20b, 20c) eine rechteckige Form aufweist.

4. Die Maschine gemäß einem oder mehreren der vorhergehenden Ansprüche, **dadurch gekennzeichnet, dass** eine der Richtungen der Richtung der Schneidelinie der Maschine entspricht und die andere der Richtungen der Bewegungslinie der Widerlagerelemente zur Positionierung der Glasscheiben (L) auf dem Werktisch (3) entspricht.

5. Die Maschine gemäß einem oder mehreren der vorhergehenden Ansprüche, **dadurch gekennzeichnet, dass** das Greifelement (20) von dem Aufbau zum Bewegen des Schneidkopfs entlang der Schneidelinie getragen wird.

## Revendications

1. Machine (1) pour couper des panneaux vitrés avec un moyen pour la rotation d'au moins un panneau (L), comprenant, sur un châssis de support (2), une table de travail (3) sur laquelle au moins un ensemble de coupe fonctionne, un élément de préhension (20) et un élément d'engagement (30) qui peuvent être couplés sur deux points espacés d'un panneau (L) à tourner, un moyen pour le mouvement de translation dudit élément de préhension (20) et un moyen pour le mouvement de translation dudit élément d'engagement (30) étant en outre fournis qui agissent le long de deux directions qui se coupent mutuellement; lesdites deux directions qui se coupent mutuellement étant essentiellement perpendiculaires l'une à l'autre; ledit élément d'engagement (30) étant constitué par au moins un élément de butée prévu sur ladite table de travail (3) pour le positionnement du panneau vitré (L) ; ledit élément de préhension (20) s'accouplant à la face inférieure dudit panneau (L) à tourner; ledit élément de préhension (20) étant constitué d'une ventouse (20a, 20b, 20c); ledit élément de préhension (20) tournant sur le pivot de support de ladite ventouse (20a, 20b, 20c); ladite machine étant **caractérisée en ce que** ledit élément d'engagement (30) comprend un rouleau (31) qui est supporté à l'extrémité d'un levier oscillant (32) qui peut osciller afin de positionner ledit rouleau (31) dans une position extraite par rapport à ladite table de travail (3) et dans une position qui repose en-dessous de ladite table de travail (3), ledit rouleau (31) étant en mesure d'exécuter un mouvement de translation en-dessous dudit panneau (L) à tourner.

2. Machine selon la revendication 1, **caractérisée en ce que** ladite ventouse (20a, 20b, 20c) a une forme circulaire.

3. Machine selon la revendication 1, **caractérisée en ce que** ladite ventouse (20a, 20b, 20c) a une forme rectangulaire.

4. Machine selon l'une ou plusieurs des revendications précédentes, **caractérisée en ce qu'**une desdites directions correspond à la direction de la ligne de coupe de la machine et l'autre desdites directions correspond à la ligne de mouvement des éléments de butée pour positionner les panneaux vitrés (L) sur ladite table de travail (3).

5. Machine selon l'une ou plusieurs des revendications précédentes, **caractérisée en ce que** ledit élément de préhension (20) est supporté par ledit ensemble pour déplacer la tête de coupe le long de ladite ligne de coupe.
